# EUROPEAN PATENT APPLICATION

(11) **EP 4 640 543 A1**
(43) Date of publication of application: **29.10.2025**
(21) Application number: 24208386.3
(22) Date of filing: 23.10.2024
(51) Int. Cl.: B62J 17/04, B62J 50/21

(54) **STRADDLED VEHICLE**

(30) Priority: 26.04.2024 JP 2024072372
(71) Applicant: Yamaha Hatsudoki Kabushiki Kaisha, Iwata-shi, Shizuoka 438-8501 (JP)
(72) Inventor: Nakagami, Masayuki, Iwata-shi, Shizuoka, 4388501 (JP); Wakimoto, Yojiro, Iwata-shi, Shizuoka, 4388501 (JP)
(74) Representative: Grünecker Patent- und Rechtsanwälte PartG mbB

(57) **Abstract**

A motorcycle (1) includes a left slider (34) slidably engaged with a left rail (32), a right slider (35) slidably engaged with a right rail (33), a windscreen (20) supported by the left slider (34) and the right slider (35), and a gauge (18) arranged rearward relative to the left rail (32) and the right rail (33). At least a portion of the left rail (32) and at least a portion of the right rail (33) overlap with a gauge (18) as the vehicle is seen from the front. An interval (G) in a vehicle width direction between the left rail (32) and the right rail (33) is smaller than a dimension (W1) in the vehicle width direction of the gauge (18). The windscreen (20) includes a left-of-meter portion (20L) that is located leftward relative to a left edge (18L) of the gauge (18), and a right-of-meter portion (20R) that is located rightward of a right edge (18R) of the gauge (18).

## Description

The present invention relates to a straddled vehicle having a movable windscreen that can be moved up and down along left and right rails.

Straddled vehicles have been known in the art that have a windscreen for preventing the rider from being directly exposed to wind. Also, straddled vehicles have been known in the art, in which the windscreen can be moved up and down to change the position of the windscreen. A straddled vehicle of this type includes left and right sliders attached to the windscreen and left and right rails that slidably support the left and right sliders. JP 2014-28591 A, for example, discloses such a straddled vehicle.

In order for the rider to obtain sufficient effect of the windscreen, it is preferable that the upper edge of the windscreen be positioned high. The windscreen is supported on the rails via the sliders. When the rails are positioned relatively low, there is a need to form the windscreen spanning from a relatively low position to a relatively high position. This results in the windscreen having a large dimension in the up-down direction. However, if the dimension of the windscreen in the up-down direction is large, it is difficult to stably support the windscreen unless the structure supporting the windscreen is made strong. On the other hand, if the rails are positioned relatively high, it is easier to stably support the windscreen.

Now, since the rails are arranged forward of the rider, if the rails are positioned relatively high, there is a concern that the field of vision for the rider may be partially blocked by the rails. However, in order to allow the rider to drive comfortably, it is desirable to secure a wider field of vision for the rider.

An object of the present invention is to provide a straddled vehicle having a windscreen that can be moved up and down along the left and right rails, wherein it is possible to stably support the windscreen and to secure a wider field of vision for the rider. According to the present invention said object is solved by a straddled vehicle having the features of independent claim 1. Preferred embodiments are laid down in the dependent claims.

A straddled vehicle disclosed herein includes: a support member supported by a vehicle body; a left rail supported by the support member, wherein the left rail extends up and down and is arranged leftward relative to a vehicle center line; a right rail supported by the support member, wherein the right rail extends up and down and is arranged rightward relative to the vehicle center line; a left slider slidably engaged with the left rail; a right slider slidably engaged with the right rail; a windscreen supported by the left slider and the right slider; and a gauge arranged rearward relative to the left rail and the right rail. At least a portion of the left rail and at least a portion of the right rail overlap with the gauge as the vehicle is seen from the front. An interval in a vehicle width direction between the left rail and the right rail is smaller than a dimension in the vehicle width direction of the gauge. The windscreen includes a left-of-meter portion that is located downward relative to an upper end of the gauge, upward relative to a lower end of the gauge, and leftward relative to a left edge of the gauge, and a right-of-meter portion that is located downward relative to the upper end of the gauge, upward relative to the lower end of the gauge, and rightward relative to a right edge of the gauge. Note that "being supported" as used herein encompasses both the case of being supported directly and the case of being supported indirectly.

With the straddled vehicle described above, at least a portion of the left rail and at least a portion of the right rail overlap with the gauge as the vehicle is seen from the front, and are arranged upward relative to the lower end of the gauge. The left rail and the right rail are arranged relatively high. Therefore, the left rail and the right rail can stably support the windscreen. With the straddled vehicle described above, the interval in the vehicle width direction between the left rail and the right rail is smaller than the dimension in the vehicle width direction of the gauge. The interval between the left rail and the right rail is relatively small. Since the left rail and the right rail are not located on the side of the gauge, the left rail and the right rail are less likely to obstruct the field of vision for the rider. Moreover, with the straddled vehicle described above, the windscreen includes the left-of-meter portion that is located downward relative to the upper end of the gauge, upward relative to the lower end of the gauge, and leftward relative to the left edge of the gauge, and the right-of-meter portion that is located downward relative to the upper end of the gauge, upward relative to the lower end of the gauge, and rightward relative to the right edge of the gauge. The rider can see forward not only through a portion of the windscreen that is upward relative to the gauge but also through the left-of-meter portion and the right-of-meter portion. Therefore, it is possible to secure a wider field of vision for the rider.

The gauge may include a display panel and a frame arranged around the display panel. The interval in the vehicle width direction between the left rail and the right rail may be smaller than a dimension in the vehicle width direction of the display panel.

A distance in the vehicle width direction between a left end of the left rail and a right end of the right rail is smaller than the dimension in the vehicle width direction of the gauge.

The straddled vehicle may include a screen support member that is fixed to the left slider, the right slider and the windscreen, and supports the windscreen.

Thus, the windscreen is supported by the screen support member fixed to the left slider and the right slider. With the screen support member, it is possible to stably support the windscreen.

The straddled vehicle may include: a left bolt that fixes together the left slider and the screen support member; and a right bolt that fixes together the right slider and the screen support member. The left bolt may overlap with the left rail and the right bolt may overlap with the right rail as the vehicle is seen from the front.

Therefore, the screen support member and the left slider can be fixed near the left rail, and the screen support member and the right slider can be fixed near the right rail. The screen support member can be stably supported on the left rail and the right rail.

The straddled vehicle may include an upper left bolt, a lower left bolt, an upper right bolt and a lower right bolt that fix together the windscreen and the screen support member. The upper left bolt may be arranged leftward relative to the left rail. The lower left bolt may be arranged leftward relative to the left rail and downward relative to the upper left bolt. The upper right bolt may be arranged rightward relative to the right rail. The lower right bolt may be arranged rightward relative to the right rail and downward relative to the upper right bolt.

Thus, the windscreen and the screen support member are fixed by the upper left bolt, the lower left bolt, the upper right bolt, and the lower right bolt that have relatively wide intervals therebetween. Therefore, the windscreen can be stably supported on the screen support member.

An upper end of the left rail and an upper end of the right rail may be located upward relative to an upper end of the gauge.

Thus, since the left rail and the right rail are arranged relatively high, it is possible to more stably support the windscreen.

The interval in the vehicle width direction between the left rail and the right rail may be smaller than a minimum dimension in the vehicle width direction of a portion of the windscreen that is below an upper end of the left rail and the right rail and above a lower end of the left rail and the right rail.

The interval in the vehicle width direction between the left rail and the right rail may be smaller than a half of a dimension in the vehicle width direction of the windscreen at a middle position in an up-down direction of the left rail or the right rail.

The windscreen may be curved rearward while extending outward in the vehicle width direction. As the vehicle is seen from the side, a distance in a vehicle front-rear direction between a front end of the windscreen and a front end of the left rail or a front end of the right rail may be smaller than a dimension in the vehicle front-rear direction of the left rail or the right rail.

Thus, it is possible to reduce the size of the front portion of the vehicle.

The straddled vehicle may include: an upper left bracket that connects together the support member and the left rail; a lower left bracket that is arranged downward of the upper left bracket and connects together the support member and the left rail; an upper right bracket that connects together the support member and the right rail, a lower right bracket that is arranged downward of the upper right bracket and connects together the support member and the right rail; an upper left pulley that is supported by the upper left bracket; a lower left pulley that is arranged downward of the upper left pulley and supported by the lower left bracket; an upper right pulley that is arranged rightward of the upper left pulley and supported by the upper right bracket; a lower right pulley that is arranged downward of the upper right pulley and rightward of the lower left pulley and supported by the lower right bracket; and a wire that is connected to the left slider and the right slider and wound around the upper left pulley, the lower left pulley, the upper right pulley, and the lower right pulley. The upper left pulley, the lower left pulley, the upper right pulley, and the lower right pulley may be arranged rightward relative to the left rail and leftward relative to the right rail.

Thus, it is possible to move the left slider and the right slider upward or downward by pulling the wire. It is possible to move the windscreen up and down by pulling the wire. Since the upper left pulley, the lower left pulley, the upper right pulley, and the lower right pulley are arranged rightward relative to the left rail and leftward relative to the right rail, the pulleys do not protrude outward in the vehicle width direction from the left rail and the right rail. Therefore, it is possible to reduce the size of the front portion of the vehicle while securing the field of vision for the rider.

Dimensions in an axial direction of the upper left pulley, the lower left pulley, the upper right pulley, and the lower right pulley may be smaller than dimensions in a radial direction thereof, respectively. Axes of the upper left pulley, the lower left pulley, the upper right pulley, and the lower right pulley may all extend forward.

Thus, it is possible to reduce the dimensions in the vehicle front-rear direction of the upper left pulley, the lower left pulley, the upper right pulley, and the lower right pulley, compared to the case where the axes of the upper left pulley, the lower left pulley, the upper right pulley, and the lower right pulley coincide with the vehicle width direction. Thus, it is possible to reduce the size of the front portion of the vehicle.

The straddled vehicle may include a motor that moves the windscreen upward or downward by pulling the wire. The motor may be arranged leftward relative to the left rail or rightward relative to the right rail.

Thus, since there is no need to arrange the motor between the left rail and the right rail as the vehicle is seen from the front, it is possible to reduce the size of the front portion of the vehicle.

The straddled vehicle may include a motor that moves the windscreen upward or downward by pulling the wire. The motor may be arranged downward relative to the left rail and the right rail.

Thus, since there is no need to arrange the motor between the left rail and the right rail as the vehicle is seen from the front, it is possible to reduce the size of the front portion of the vehicle. Moreover, it is easy to reduce the interval in the vehicle width direction between the left rail and the right rail.

The straddled vehicle may include a motor that moves the windscreen upward or downward. The motor may be arranged leftward relative to the left rail and rightward relative to the right rail.

Thus, since there is no need to arrange the motor between the left rail and the right rail as the vehicle is seen from the front, it is possible to reduce the size of the front portion of the vehicle. Moreover, it is easy to reduce the interval in the vehicle width direction between the left rail and the right rail.

The straddled vehicle may include a motor that moves the windscreen upward or downward. The motor may be arranged downward relative to the left rail and the right rail.

Thus, since there is no need to arrange the motor between the left rail and the right rail as the vehicle is seen from the front, it is possible to reduce the size of the front portion of the vehicle. Moreover, it is easy to reduce the interval in the vehicle width direction between the left rail and the right rail.

### EFFECTS OF INVENTION

According to the present invention, in a straddled vehicle having a windscreen that can be moved up and down along left and right rails, it is possible to stably support the windscreen and to secure a wider field of vision for the rider.

### BRIEF DESCRIPTION OF DRAWINGS

FIG. 1 is a right side view of a motorcycle according to an embodiment.
FIG. 2 is a front view of the motorcycle.
FIG. 3 is a front view of a front portion of the motorcycle.
FIG. 4 is a left side view of the front portion of the motorcycle.
FIG. 5 is a front view of the front portion, with the windscreen omitted.
FIG. 6 is a front view of a portion of the front portion that is arranged rearward of a screen support member.
FIG. 7 is a left side view of the front portion, with the windscreen and the screen support member omitted.
FIG. 8 is a view of the front portion as seen from the rear side.
FIG. 9 is a left side view of the front portion, with the screen support member omitted.

### DESCRIPTION OF EMBODIMENTS

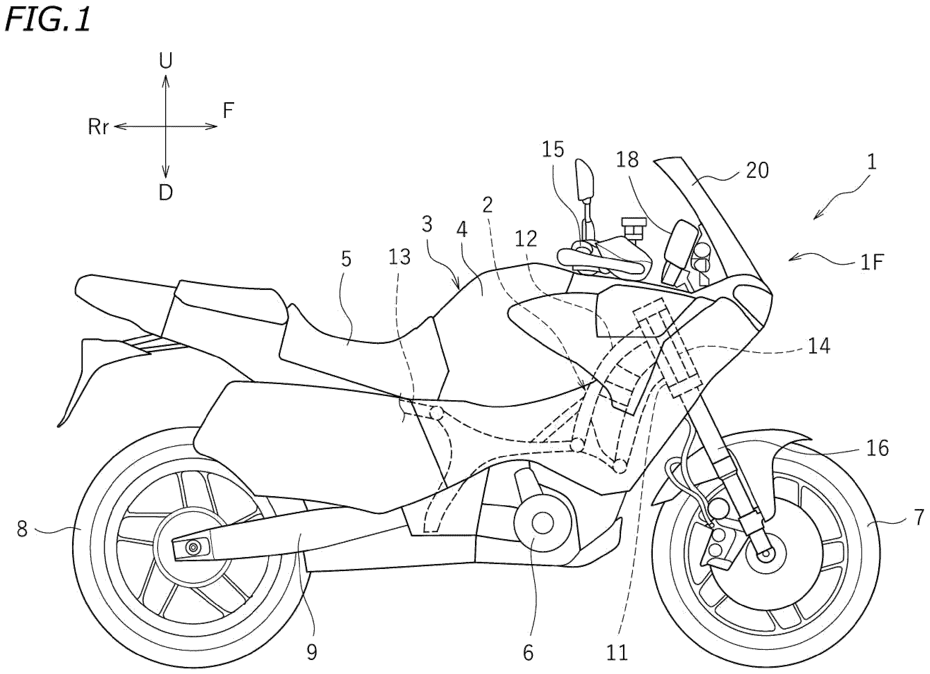

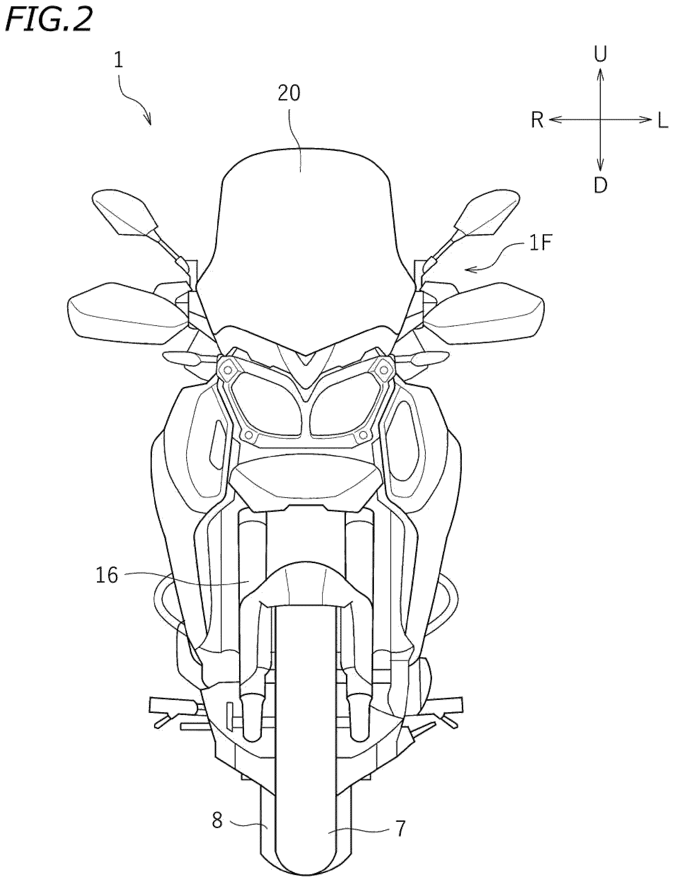

One embodiment of a straddled vehicle will now be described with reference to the drawings. FIG. 1 is a right side view of a motorcycle 1, which is an example of the straddled vehicle. FIG. 2 is a front view of the motorcycle 1.

The terms front, rear, left, right, up and down, as used in the description below, refer to these directions as seen from a virtual rider seated on a seat 5 while the motorcycle 1 is standing upright on a horizontal surface with no rider and no load thereon, unless specified otherwise. The designations F, Rr, L, R, U and D, as used in the figures, refer to front, rear, left, right, up and down, respectively. Accordingly, it is referred to a vehicle front-rear direction, a vehicle left-right direction and a vehicle up-down direction. A vehicle center line CL extends in the vehicle up-down direction through a center of the vehicle with regard to the vehicle left-right direction.

The motorcycle 1 includes a vehicle body 3. The vehicle body 3 includes a vehicle body frame 2, a fuel tank 4, and a seat 5. The vehicle body 3 also includes a front fork 16 to be described below and exterior parts, etc. The fuel tank 4 and the seat 5 are supported by the vehicle body frame 2. The seat 5 is arranged rearward of the fuel tank 4. The vehicle body frame 2 includes a head pipe 11, a main frame 12 extending rearward from the head pipe 11, and a seat frame 13 extending rearward from the main frame 12. The seat 5 is supported by the seat frame 13.

The motorcycle 1 includes an internal combustion engine 6 as a driving source for running. Alternatively, the driving source for running may be an electric motor. The internal combustion engine 6 is supported by the vehicle body frame 2.

The motorcycle 1 includes a front wheel 7 and a rear wheel 8. The front wheel 7 is rotatably mounted to the lower end portion of the front fork 16. A steering shaft 14 is fixed to the front fork 16. The steering shaft 14 is supported by the head pipe 11 so that the steering shaft 14 can rotate left and right. A steering handle 15 is attached to the steering shaft 14. The rear wheel 8 is rotatably supported on the rear end portion of a rear arm 9. Although it is omitted from the illustration, the front end portion of the rear arm 9 is supported by the vehicle body frame 2 so that the rear arm 9 can swing up and down.

The motorcycle 1 includes a front section 1F that includes a gauge 18 including a speedometer, etc., and a windscreen 20. Next, the configuration of the front section 1F will be described below.

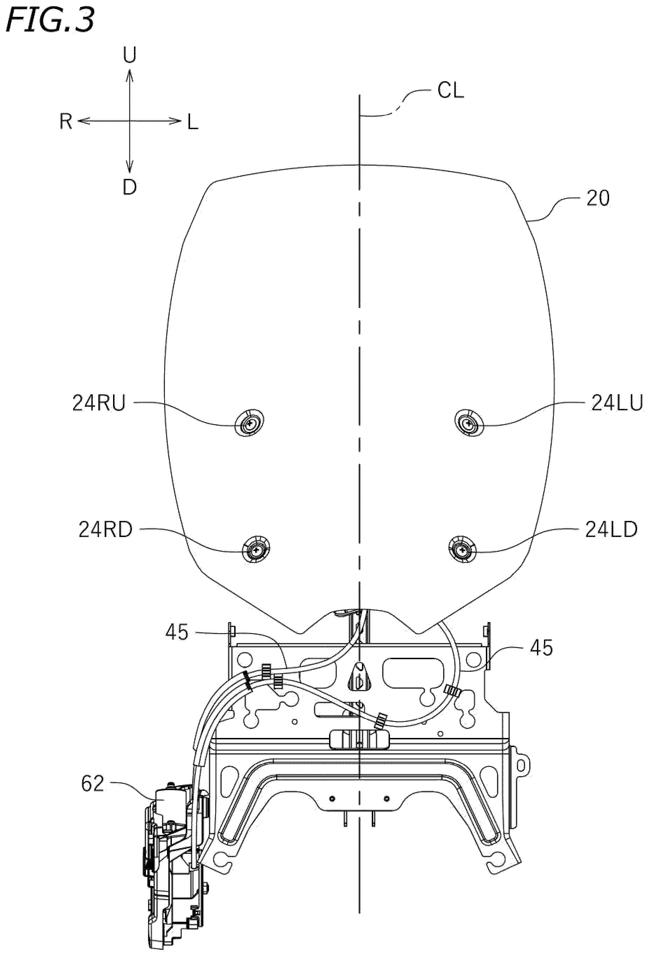

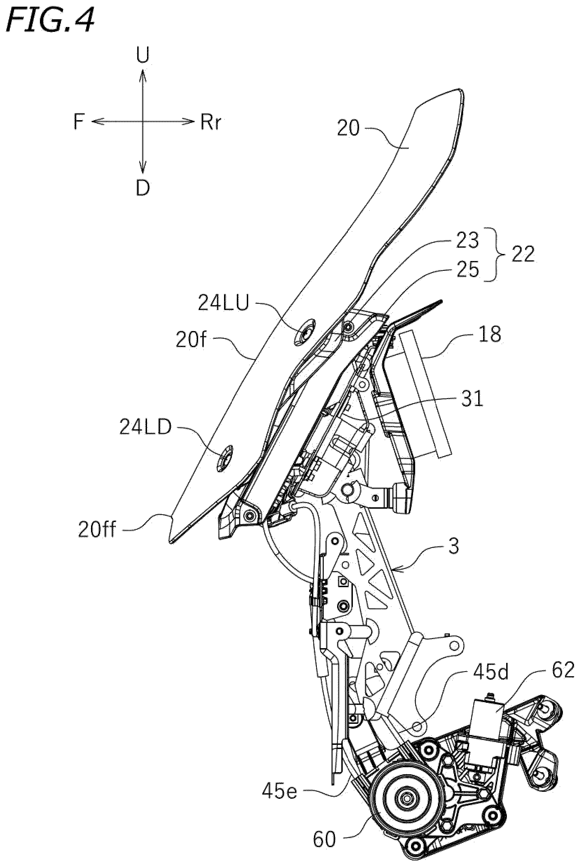

FIG. 3 and FIG. 4 are a front view and a left side view, respectively, of the front section 1F. The windscreen 20 is curved rearward while extending outward in the vehicle width direction. Note that the vehicle width direction is synonymous with the left-right direction of the vehicle. Outward in the vehicle width direction refers to the direction away from the vehicle center line CL. Inward in the vehicle width direction refers to the direction toward the vehicle center line CL. In the present embodiment, the dimension of the windscreen 20 in the up-down direction is larger than the dimension of the windscreen 20 in the left-right direction. Alternatively, the dimension of the windscreen 20 in the up-down direction may be less than or equal to the dimension in the left-right direction.

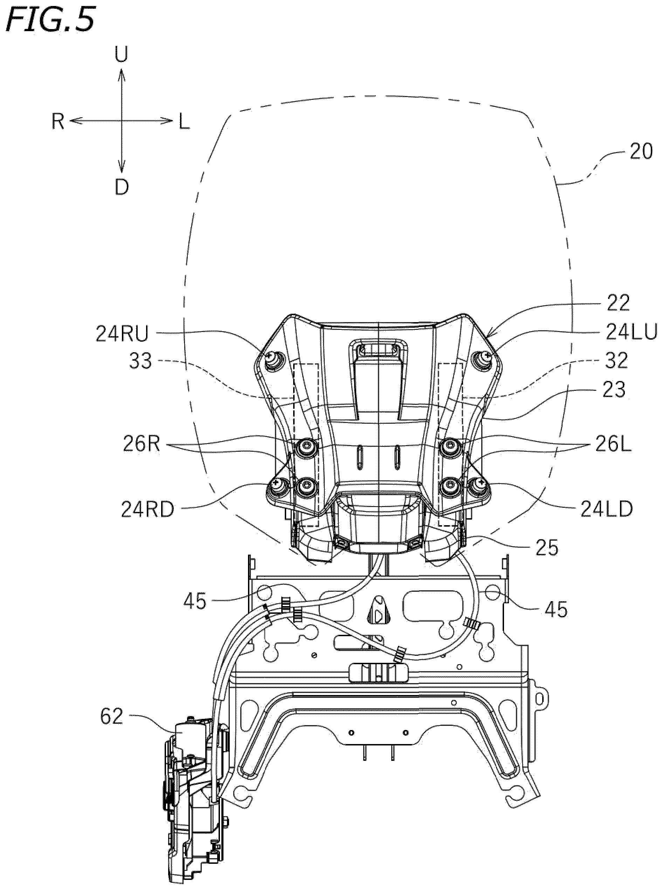

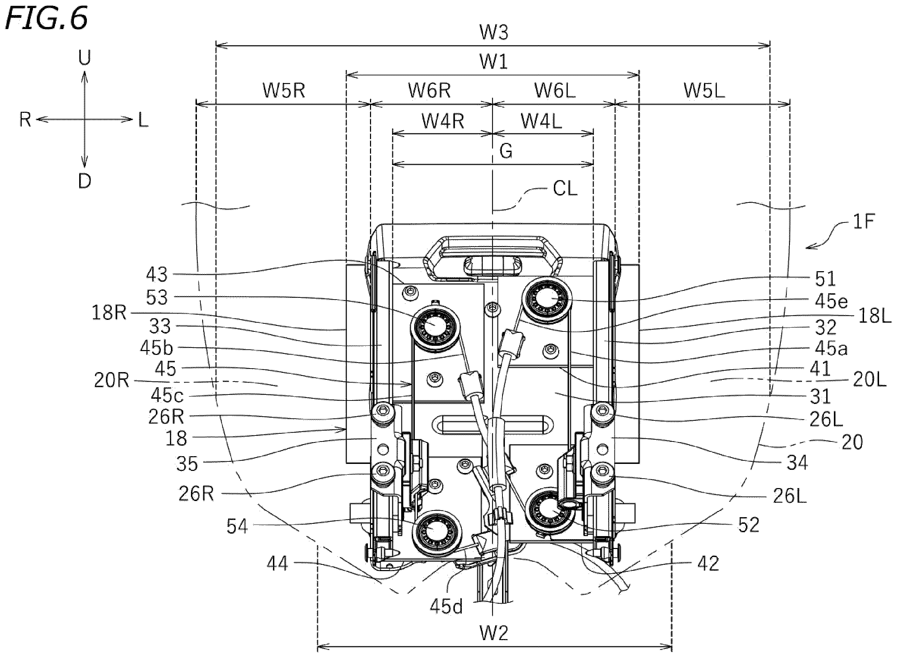

FIG. 5 is a front view of the front section 1F, with the windscreen 20 omitted. As shown in FIG. 5, the screen support member 22 is arranged rearward of the windscreen 20. The windscreen 20 is fixed to the screen support member 22 by an upper left bolt 24LU, a lower left bolt 24LD, an upper right bolt 24RU, and a lower right bolt 24RD (see FIG. 3). The windscreen 20 is supported by the screen support member 22. The screen support member 22 is fixed to a left slider 34 (see FIG. 6) to be described below by one or more left bolts 26L, and is fixed to a right slider 35 (see FIG. 6) to be described below by one or more right bolts 26R. In the present embodiment, the screen support member 22 is fixed to the left slider 34 by a pair of upper and lower left bolts 26L, and is fixed to the right slider 35 by a pair of upper and lower right bolts 26R.

In the present embodiment, the screen support member 22 includes a first member 23 and a second member 25 (see FIG. 4). The first member 23 and the second member 25 are laid on each other in the front-rear direction and are fixed to each other. The windscreen 20 is fixed to the first member 23 by the upper left bolt 24LU, the lower left bolt 24LD, the upper right bolt 24RU, and the lower right bolt 24RD. The second member 25 is fixed to the left slider 34 by the left bolt 26L and is fixed to the right slider 35 by the right bolt 26R. Note however that the configuration of the screen support member 22 according to the present embodiment is merely an example. The screen support member 22 may be configured by plurality of members assembled together as in the present embodiment, or it may be configured by a single member.

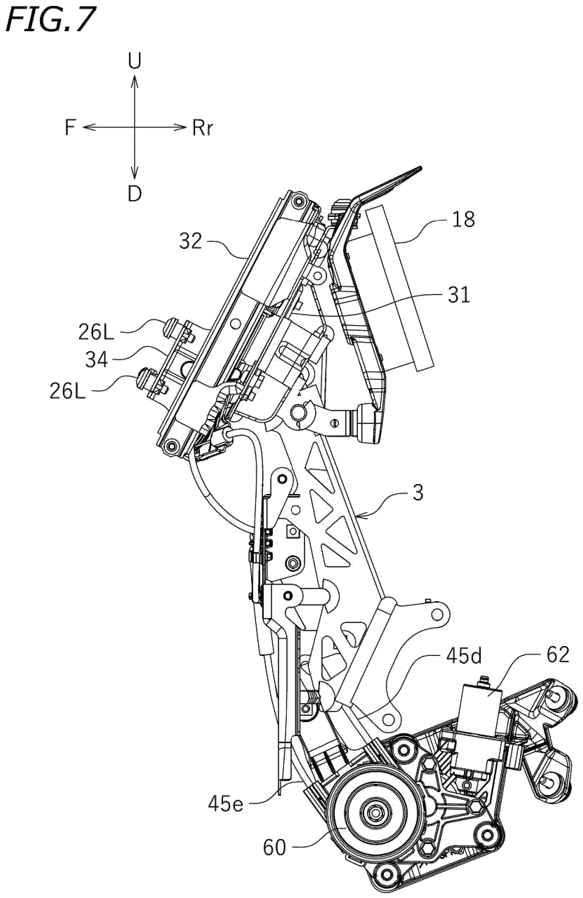

FIG. 6 is a front view of a portion of the front section 1F that is arranged rearward of the screen support member 22. FIG. 7 is a left side view of the front section 1F, with the windscreen 20 and the screen support member 22 omitted.

As shown in FIG. 6, the front section 1F includes a support member 31 supported by the vehicle body 3, and a left rail 32 and a right rail 33 supported by the support member 31. The support member 31 is preferably supported by the vehicle body frame 2. The left rail 32 is arranged leftward relative to the vehicle center line CL, and the right rail 33 is arranged rightward relative to the vehicle center line CL. The left rail 32 and the right rail 33 extend up and down. Here, as shown in FIG. 7, the left rail 32 and the right rail 33 extend upward and backward. The left rail 32 and the right rail 33 extend in a straight line. As shown in FIG. 6, the left rail 32 and the right rail 33 are arranged parallel to the vehicle center line CL as the vehicle is seen from the front. The left rail 32 and the right rail 33 are parallel to a vertical line as the vehicle is seen from the front. Note however that the left rail 32 and the right rail 33 may be non-parallel to the vehicle center line CL. As shown in FIG. 7, the gauge 18 is arranged rearward relative to the left rail 32 and the right rail 33.

As shown in FIG. 6, the left rail 32 is supported indirectly by the support member 31 via an upper left bracket 41 and a lower left bracket 42. The upper left bracket 41 and the lower left bracket 42 connect together the support member 31 and the left rail 32. The right rail 33 is supported indirectly by the support member 31 via an upper right bracket 43 and a lower right bracket 44. The upper right bracket 43 and the lower right bracket 44 connect together the support member 31 and the right rail 33. Note however that the left rail 32 and the right rail 33 may be supported directly by the support member 31. The lower left bracket 42 is arranged downward of the upper left bracket 41. The lower right bracket 44 is arranged downward of the upper right bracket 43.

The left slider 34 is slidably engaged with the left rail 32. The right slider 35 is slidably engaged with the right rail 33. As mentioned above, the screen support member 22 is fixed to the left slider 34 and the right slider 35, and the windscreen 20 is fixed to the screen support member 22. The windscreen 20 is supported by the left slider 34 and the right slider 35. Therefore, the windscreen 20 moves upward when the left slider 34 and the right slider 35 move upward, and the windscreen 20 moves downward when the left slider 34 and the right slider 35 move downward. The position of the windscreen 20 can be changed by moving the windscreen 20 upward or downward.

An upper left pulley 51, a lower left pulley 52, an upper right pulley 53, and a lower right pulley 54 are supported by the upper left bracket 41, the lower left bracket 42, the upper right bracket 43, and the lower right bracket 44, respectively. The upper left pulley 51, the lower left pulley 52, the upper right pulley 53, and the lower right pulley 54 are arranged rightward of the left rail 32 and leftward of the right rail 33. The upper left pulley 51, the lower left pulley 52, the upper right pulley 53, and the lower right pulley 54 are arranged between the left rail 32 and the right rail 33 as the vehicle is seen from the front. The lower left pulley 52 is arranged downward of the upper left pulley 51. The upper right pulley 53 is arranged rightward of the upper left pulley 51. The lower right pulley 54 is arranged downward of the upper right pulley 53 and rightward of the lower left pulley 52.

The dimension in the axial direction of the upper left pulley 51 is smaller than the dimension in the radial direction of the upper left pulley 51. Similarly, the dimensions in the axial direction of the lower left pulley 52, the upper right pulley 53, and the lower right pulley 54 are smaller than the dimensions in the radial direction of the lower left pulley 52, the upper right pulley 53, and the lower right pulley 54, respectively. The axes of the upper left pulley 51, the lower left pulley 52, the upper right pulley 53, and the lower right pulley 54 all extend forward. Note that the axes of the upper left pulley 51, the lower left pulley 52, the upper right pulley 53, and the lower right pulley 54 are the rotational center lines of the upper left pulley 51, the lower left pulley 52, the upper right pulley 53, and the lower right pulley 54, respectively. The axis of the upper left pulley 51, the lower left pulley 52, the upper right pulley 53, or the lower right pulley 54 may be aligned with a horizontal line extending in the vehicle front-rear direction, or it may be inclined with respect to the horizontal line.

A wire 45 is connected to the left slider 34 and the right slider 35. The wire 45 is wound around the upper left pulley 51, the lower left pulley 52, the upper right pulley 53, and the lower right pulley 54. The wire 45 has a first portion 45a located between the upper left pulley 51 and the lower left pulley 52, a second portion 45b located between the lower left pulley 52 and the upper right pulley 53, and a third portion 45c located between the upper right pulley 53 and the lower right pulley 54. The left slider 34 is connected to the first portion 45a, and the right slider 35 is connected to the third portion 45c.

As shown in FIG. 4, the motorcycle 1 includes a drive pulley 60 around which the wire 45 is wound, and a motor 62 that drives the drive pulley 60. The wire 45 has a fourth portion 45d located between the lower right pulley 54 and the drive pulley 60, and a fifth portion 45e located between the upper left pulley 51 and the drive pulley 60.

Although not shown in the figures, the motor 62 and the drive pulley 60 are linked to each other by a power transmission member having gears, etc. The motor 62 is configured to pull a portion of the wire 45 via the drive pulley 60. The motor 62 is a motor that can rotate in both directions. When the motor 62 rotates in the first direction, the fourth portion 45d of the wire 45 is pulled downward. As a result, the wire 45 runs from the upper left pulley 51 toward the lower left pulley 52, and also runs from the upper right pulley 53 toward the lower right pulley 54. As the left slider 34 and the right slider 35 move downward, the windscreen 20 moves downward. On the other hand, when the motor 62 rotates in the second direction, which is the opposite of the first direction, the fifth part 45e of the wire 45 is pulled downward. As a result, the wire 45 runs from the lower left pulley 52 toward the upper left pulley 51, and also runs from the lower right pulley 54 toward the upper right pulley 53. As the left slider 34 and the right slider 35 move upward, the windscreen 20 moves upward. According to the present embodiment, the position of the windscreen 20 can be changed by the motor 62.

As shown in FIG. 5, the motor 62 is arranged outward in the vehicle width direction of the left rail 32 and the right rail 33. Here, the motor 62 is arranged rightward relative to the right rail 33. Note however that the motor 62 may be arranged leftward relative to the left rail 32. The motor 62 is arranged downward relative to the left rail 32 and the right rail 33. The motor 62 is not arranged in the area (hereinafter referred to as the "inter-rail area") that is rightward relative to the left rail 32, leftward relative to the right rail 33, downward relative to the upper ends of the left rail 32 and the right rail 33, and upward relative to the lower ends of the left rail 32 and the right rail 33. According to the present embodiment, the upper left pulley 51, the lower left pulley 52, the upper right pulley 53, and the lower right pulley 54 are arranged in the inter-rail area (see FIG. 6). However, since there is no need to arrange the motor 62 in the inter-rail area, the interval G in the vehicle width direction between the left rail 32 and the right rail 33 can be made relatively small.

The windscreen 20 is supported by the left slider 34 and the right slider 35 via the screen support member 22. As mentioned above, the screen support member 22 is fixed to the left slider 34 by the left bolt 26L and fixed to the right slider 35 by the right bolt 26R. As shown in FIG. 6, the left bolt 26L overlaps with the left rail 32 as the vehicle is seen from the front. Also, the right bolt 26R overlaps with the right rail 33 as the vehicle is seen from the front.

As shown in FIG. 3, the windscreen 20 is fixed to the screen support member 22 by the upper left bolt 24LU, the lower left bolt 24LD, the upper right bolt 24RU, and the lower right bolt 24RD. The upper left bolt 24LU and the lower left bolt 24LD are arranged to leftward relative to the vehicle center line CL, and the upper right bolt 24RU and the lower right bolt 24RD are arranged rightward relative to the vehicle center line CL. As shown in FIG. 5, the upper left bolt 24LU and the lower left bolt 24LD are arranged leftward relative to the left rail 32. The upper right bolt 24RU and the lower right bolt 24RD are arranged rightward relative to the right rail 33. The lower left bolt 24LD is arranged downward relative to the upper left bolt 24LU. The lower right bolt 24RD is arranged downward relative to the upper right bolt 24RU. In the present embodiment, the upper left bolt 24LU and the upper right bolt 24RU are arranged upward relative to the middle position of the screen support member 22 in the up-down direction, and the lower left bolt 24LD and the lower right bolt 24RD are arranged downward relative to the middle position of the screen support member 22 in the up-down direction.

As shown in FIG. 6, as the vehicle is seen from the front, the distance W4L in the vehicle width direction between the left rail 32 and the vehicle center line CL is smaller than the distance W5L in the vehicle width direction between the left rail 32 and the left end of the windscreen 20. As the vehicle is seen from the front, the distance W6L in the vehicle width direction between the left end of the left rail 32 and the vehicle center line CL is smaller than the distance W5L in the vehicle width direction between the left rail 32 and the left end of the windscreen 20. As the vehicle is seen from the front, the left rail 32 is arranged inward in the vehicle width direction relative to the center in the vehicle width direction of the left half portion of the windscreen 20. Similarly, as the vehicle is seen from the front, the distance W4R in the vehicle width direction between the right rail 33 and the vehicle center line CL is smaller than the distance W5R in the vehicle width direction between the right rail 33 and the right end of the windscreen 20. As the vehicle is seen from the front, the distance W6R in the vehicle width direction between the right end of the right rail 33 and the vehicle center line CL is smaller than the distance W5R in the vehicle width direction between the right rail 33 and the right end of the windscreen 20. As the vehicle is seen from the front, the right rail 33 is arranged inward in the vehicle width direction relative to the center in the vehicle width direction of the right half portion of the windscreen 20.

According to the present embodiment, the interval (hereinafter referred to as the "rail interval") G between the left rail 32 and the right rail 33 in the vehicle width direction is relatively small. In the present embodiment, the rail interval G is smaller than the dimension W1 in the vehicle width direction of the gauge 18. Note that the dimension in the vehicle width direction of the gauge 18 refers to the left-right width of the gauge 18. If the left-right width of the gauge 18 is not constant, the dimension in the vehicle width direction of the gauge 18 means the maximum left-right width of the gauge 18. At least a portion of the left rail 32 and at least a portion of the right rail 33 overlap with the gauge 18 as the vehicle is seen from the front. According to the present embodiment, the rail interval G is smaller than the minimum dimension W2 in the vehicle width direction of a portion of the windscreen 20 that is below the upper end of the left rail 32 and the right rail 33 and above the lower end of the left rail 32 and the right rail 33. The rail interval G is smaller than a half of the dimension W3 in the vehicle width direction of the windscreen 20 at the middle position in the up-down direction of the left rail 32 or the right rail 33. The rail interval G is smaller than the dimension in the up-down direction of each of the left rail 32 and the right rail 33. The distance in the vehicle width direction between the left end of the left rail 32 and the right end of the right rail 33 (i.e., W6L+W6R) is smaller than the dimension W1 in the vehicle width direction of the gauge 18.

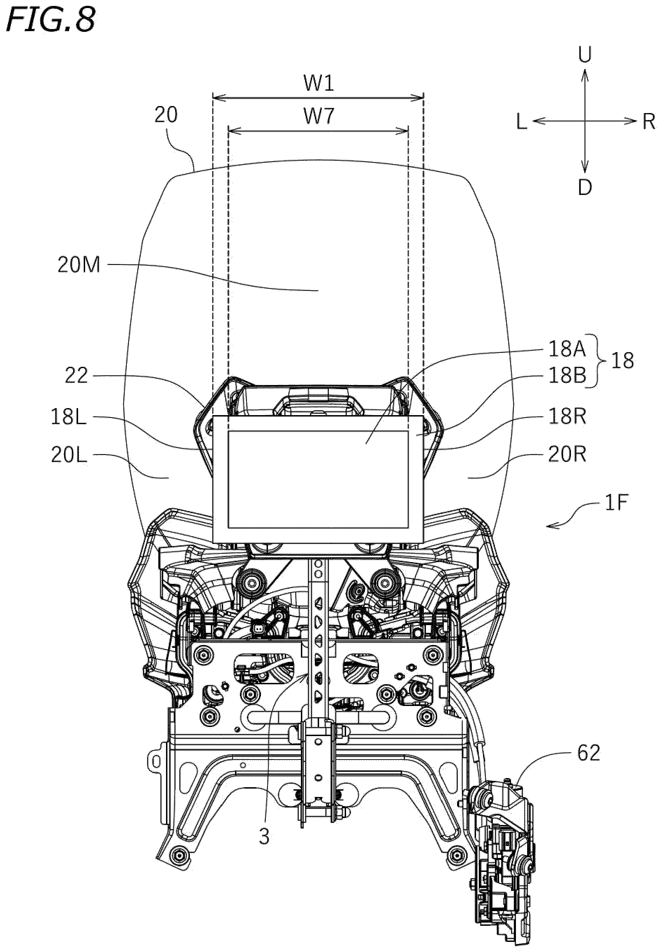

FIG. 8 is a view of the front section 1F as seen from the rear side. In other words, FIG. 8 is a view of the front section 1 F as seen by the rider seated on the seat 5. As shown in FIG. 8, the gauge 18 includes a display panel 18A and a frame 18B arranged around the display panel 18A. In the present embodiment, a display panel 18A is made of transparent resin, and the frame 18B is made of opaque resin. As mentioned above, the rail interval G between the left rail 32 and the right rail 33 is smaller than the dimension W1 in the vehicle width direction of the gauge 18. Here, the rail interval G is smaller than the dimension W7 in the vehicle width direction of the display panel 18A. As seen by the rider, the gauge 18 overlaps with at least a portion of the left rail 32 and at least a portion of the right rail 33. The left rail 32 does not protrude leftward of the gauge 18, and the right rail 33 does not protrude rightward of the gauge 18.

As shown in FIG. 8, the windscreen 20 includes a left-of-meter portion 20L that is located downward relative to the upper end of the gauge 18, upward relative to the lower end of the gauge 18, and leftward relative to a left edge 18L of the gauge 18. The windscreen 20 also includes a right-of-meter portion 20R that is located downward relative to the upper end of the gauge 18, upward relative to the lower end of the gauge 18, and rightward relative to a right edge 18R of the gauge 18. The rider can see forward through at least a portion of the left-of-meter portion 20L and at least a portion of the right-of-meter portion 20R.

As mentioned above, the windscreen 20 is curved rearward while extending outward in the vehicle width direction. The portion of the windscreen 20 that is farther from the vehicle center line CL is located more rearward in the vehicle front-rear direction. As shown in FIG. 4, the portion of the windscreen 20 that is located on the vehicle center line CL forms a front edge 20f of the windscreen 20 as the vehicle is seen from the side. Here, the portion of the front edge 20f that is located most forward is a front end 20ff of the windscreen 20. Here, the front end 20ff is the portion of the front edge 20f that is located most downward.

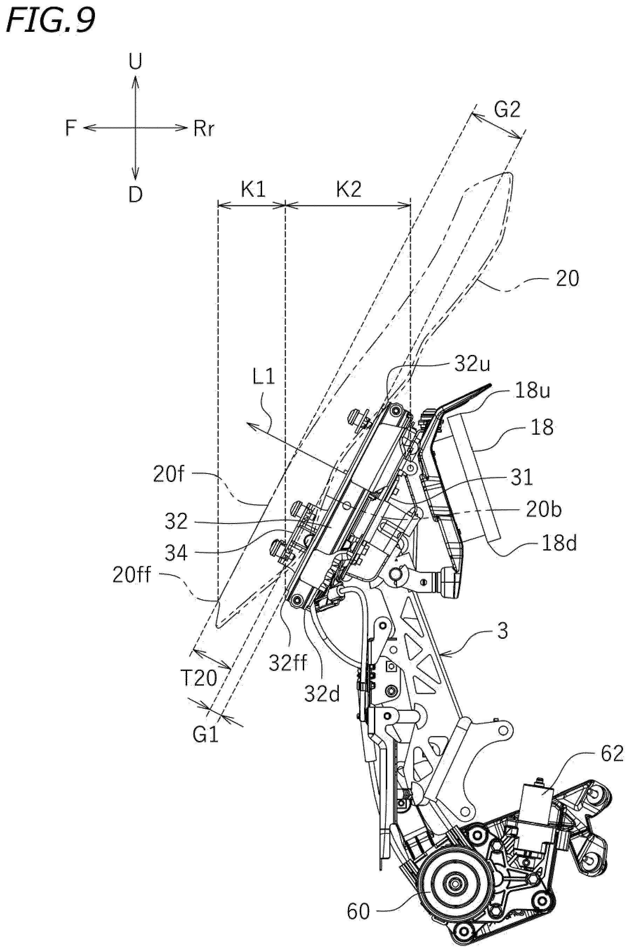

As shown in FIG. 9, in the present embodiment, the left rail 32 and the right rail 33 are arranged near the front edge 20f of the windscreen 20. The distance in the vehicle front-rear direction between the left rail 32 and the front edge 20f of the windscreen 20 is relatively short. The distance in the vehicle front-rear direction between the right rail 33 and the front edge 20f of the windscreen 20 is relatively short. The distance in the vehicle front-rear direction between the left rail 32 and the front end 20ff of the windscreen 20 is relatively short. The distance in the vehicle front-rear direction between the right rail 33 and the front end 20ff of the windscreen 20 is relatively short.

The left rail 32 and the right rail 33 overlap with each other as the vehicle is seen from the side. Therefore, the position of the left rail 32 in the front-rear direction and the up-down direction coincides with the position of the right rail 33 in the front-rear direction and the up-down direction. Therefore, only the position of the left rail 32 in the front-rear direction and the up-down direction will be described below, and the description of that of the right rail 33 will be omitted but can be applied to the right rail 33.

The left rail 32 and the right rail 33 extend in a straight line. The direction perpendicular to the direction of extension of the left rail 32 and the right rail 33, as the vehicle is seen from the side, will be referred to as the L1 direction. In the present embodiment, as the vehicle is seen from the side, the maximum interval G1 in the L1 direction between the windscreen 20 and the left rail 32 is smaller than the minimum dimension T20 of the windscreen 20 in the L1 direction. The maximum interval G1 may be less than or equal to 1/2 of the minimum dimension T20, and may be less than or equal to 1/3 of the minimum dimension T20.

In the present embodiment, the left rail 32 does not overlap with a rear edge 20b of the windscreen 20 as the vehicle is seen from the side. However, the left rail 32 may overlap with the rear edge 20b of the windscreen 20 as the vehicle is seen from the side. The left slider 34 partially overlaps with the windscreen 20 as the vehicle is seen from the side. The left slider 34 may entirely overlap with the windscreen 20 as the vehicle is seen from the side.

As the vehicle is seen from the side, the distance K1 in the vehicle front-rear direction between the front end 20ff of the windscreen 20 and the front end 32ff of the left rail 32 is smaller than the dimension K2 in the vehicle front-rear direction of the left rail 32, that is distance in the vehicle front-rear direction of the front end 32ff of the left rail 32 and a rear end of the left rail 32. As the vehicle is seen from the side, the maximum distance G2 in the L1 direction between the front edge 20f of the windscreen 20 and the left rail 32 is smaller than the dimension K2 in the vehicle front-rear direction of the left rail 32. As the vehicle is seen from the side, the maximum distance G2 in the L1 direction between the front edge 20f of the windscreen 20 and the left rail 32 is smaller than the distance K1 in the vehicle front-rear direction between the front end 20ff of the windscreen 20 and the front end 32ff of the left rail 32.

A lower end 32d of the left rail 32 is located downward relative to a lower end 18d of the gauge 18. An upper end 32u of the left rail 32 is located upward relative to the lower end 18d of the gauge 18. In the present embodiment, the upper end 32u of the left rail 32 is located upward relative to an upper end 18u of the gauge 18. Note however that the upper end 32u of the left rail 32 may be located downward relative to the upper end 18u of the gauge 18, and may be at the same height as the upper end 18u of the gauge 18.

As described above, with the motorcycle 1 according to the present embodiment, at least a portion of the left rail 32 and at least a portion of the right rail 33 overlap with the gauge 18 as the vehicle is seen from the front (see FIG. 6), and are arranged upward relative to the lower end 18d of the gauge 18 (see FIG. 9). The left rail 32 and the right rail 33 are arranged relatively high. Therefore, the left rail 32 and the right rail 33 can stably support the windscreen 20.

With the motorcycle 1 according to the present embodiment, the interval G in the vehicle width direction between the left rail 32 and the right rail 33 is smaller than the dimension W1 in the vehicle width direction of the gauge 18 (see FIG. 6). The interval G between the left rail 32 and the right rail 33 is relatively small. Since the left rail 32 and the right rail 33 are not located on the side of the gauge 18, the left rail 32 and the right rail 33 are less likely to obstruct the field of vision for the rider. As shown in FIG. 8, the windscreen 20 includes the left-of-meter portion 20L located downward relative to the upper end of the gauge 18, upward relative to the lower end of the gauge 18, and leftward relative to the left edge 18L of the gauge 18, and the right-of-meter portion 20R located downward relative to the upper end of the gauge 18, upward relative to the lower end of the gauge 18, and rightward relative to the right edge 18R of the gauge 18. The rider can see forward not only through a portion 20M that is upward relative to the gauge 18 but also through the left-of-meter portion 20L and the right-of-meter portion 20R. Thus, according to the present embodiment, it is possible to secure a wider field of vision for the rider.

With the motorcycle 1 according to the present embodiment, the windscreen 20 is curved rearward while extending outward in the vehicle width direction. The portion of the windscreen 20 that is farther from the central portion in the vehicle width direction has a greater distance in the vehicle front-rear direction from the front edge 20f of the windscreen 20 (see FIG. 9). There is a need to secure a certain dimension for the dimension K2 (see FIG. 9) in the vehicle front-rear direction of the left rail 32 and the right rail 33, and for the dimension in the vehicle front-rear direction of the left slider 34 and the right slider 35. However, according to the present embodiment, the interval G in the vehicle width direction between the left rail 32 and the right rail 33 is relatively small. Therefore, the left rail 32 and the right rail 33 are arranged near the central portion of the windscreen 20. According to the present embodiment, since the left rail 32 and the right rail 33 can be arranged near the front edge 20f of the windscreen 20, it is possible to reduce the size of the front part 1F of the motorcycle 1.

With the motorcycle 1 according to the present embodiment, the windscreen 20 is supported by the screen support member 22 fixed to the left slider 34 and the right slider 35 (see FIG. 5). With the screen support member 22, it is possible to stably support the windscreen 20.

The screen support member 22 is fixed to the left slider 34 by the left bolt 26L and to the right slider 35 by the right bolt 26R (see FIG. 5 and FIG. 6). As shown in FIG. 6, as the vehicle is seen from the front, the left bolt 26L overlaps with the left rail 32 and the right bolt 26R overlaps with the right rail 33. The screen support member 22 and left slider 34 can be fixed near the left rail 32, and the screen support member 22 and right slider 35 can be fixed near the right rail 33. According to the present embodiment, the screen support member 22 can be stably supported on the left rail 32 and the right rail 33.

The windscreen 20 is fixed to the screen support member 22 by the upper left bolt 24LU, the lower left bolt 24LD, the upper right bolt 24RU, and the lower right bolt 24RD (see FIG. 3 and FIG. 5). As shown in FIG. 5, the upper left bolt 24LU and the lower left bolt 24LD are arranged leftward relative to the left rail 32, and the upper right bolt 24RU and the lower right bolt 24RD are arranged rightward relative to the right rail 33. The upper left bolt 24LU, the lower left bolt 24LD, the upper right bolt 24RU, and the lower right bolt 24RD are widely spaced from each other. Thus, the windscreen 20 can be stably supported on the screen support member 22.

According to the present embodiment, the upper end 32u of the left rail 32 and the upper end of the right rail 33 are located upward relative to the upper end 18u of the gauge 18 (see FIG. 9). Since the left rail 32 and the right rail 33 are arranged relatively high, it is possible to more stably support the windscreen 20.

According to the present embodiment, as the vehicle is seen from the side, the distance K1 in the vehicle front-rear direction between the front end 20ff of the windscreen 20 and the front end 32f of the left rail 32 or the front end of the right rail 33 is smaller than the dimension K2 in the vehicle front-rear direction of the left rail 32 or the right rail 33 (see FIG. 9). According to the present embodiment, it is possible to reduce the size of the front section 1 F of the motorcycle 1.

The motorcycle 1 according to the present embodiment includes the wire 45 to which the left slider 34 and the right slider 35 are connected, and the upper left pulley 51, the lower left pulley 52, the upper right pulley 53, and the lower right pulley 54, around which the wire 45 is wound (see FIG. 6). By pulling the wire 45, the left slider 34 and the right slider 35 can be moved upward or downward. By pulling the wire 45, the windscreen 20 can be moved up and down, and the position of the windscreen 20 can be changed. According to the present embodiment, the upper left pulley 51, the lower left pulley 52, the upper right pulley 53, and the lower right pulley 54 are arranged rightward relative to the left rail 32 and leftward relative to the right rail 33. Therefore, the upper left pulley 51, the lower left pulley 52, the upper right pulley 53, and the lower right pulley 54 do not protrude outward in the vehicle width direction from the left rail 32 and the right rail 33. Thus, it is possible to reduce the size of the front section 1F of the motorcycle 1.

According to the present embodiment, the axes of the upper left pulley 51, the lower left pulley 52, the upper right pulley 53, and the lower right pulley 54 all extend forward. Thus, it is possible to reduce the dimensions in the vehicle front-rear direction of the upper left pulley 51, the lower left pulley 52, the upper right pulley 53, and the lower right pulley 54, compared to the case where the axes of the upper left pulley 51, the lower left pulley 52, the upper right pulley 53, and the lower right pulley 54 coincide with the vehicle width direction. Thus, it is possible to reduce the size of the front section 1F of the motorcycle 1.

The motorcycle 1 according to the present embodiment includes the motor 62 that moves the windscreen 20 upward or downward by pulling the wire 45 (see FIG. 5). The motor 62 is arranged rightward relative to the right rail 33. According to the present embodiment, since there is no need to arrange the motor 62 between the left rail 32 and the right rail 33 as the vehicle is seen from the front, it is possible to reduce the size of the front section 1F of the motorcycle 1.

With the motorcycle 1 according to the present embodiment, the motor 62 is arranged downward relative to the left rail 32 and the right rail 33. There is no need to arrange the motor 62 between the left rail 32 and the right rail 33 as the vehicle is seen from the front. Thus, it is possible to reduce the size of the front section 1F of the motorcycle 1.

One embodiment has been described above. However, the embodiment described above is merely an example, and various other embodiments are possible.

The shape of the windscreen 20 according to the embodiment described above is an example. The windscreen 20 may be entirely transparent, or a portion of the windscreen 20 that does not obstruct the line of sight of the rider may be partly or entirely opaque. The entire windscreen 20 may be opaque if the entire windscreen 20 is lower than the line of sight of the rider.

In the embodiment described above, the motor 62 is configured to drive the left slider 34 and the right slider 35 via the wire 45, but the motor 62 may be configured to drive the left slider 34 and the right slider 35 via gears. In that case, the pulleys 51 to 54 are not needed.

In the embodiment described above, in order to change the position of the windscreen 20, the motor 62 pulls the wire 45 to move the windscreen 20 up and down. That is, the windscreen 20 is configured to move up and down automatically by the motor 62. Note however that the windscreen 20 does not need to be automatic. The windscreen 20 may be configured to be moved up and down manually. For example, the motorcycle 1 may include a handle for pulling the wire 45. For example, the motorcycle 1 may include a handle linked to the drive pulley 60. In such a case, the rider, or another person, can manually rotate the drive pulley 60 by operating the handle. This pulls the wire 45, and it is possible to manually move the windscreen 20 up and down.

A straddled vehicle refers to a vehicle that is straddled by a passenger. The straddled vehicle is the motorcycle 1. Alternatively, the straddled vehicle may be an auto tricycle, an ATV (All Terrain Vehicle), or a snowmobile, for example.

### DESCRIPTION OF REFERENCE SIGNS

- 1: Motorcycle (straddled vehicle)
- 3: Vehicle body
- 18: Gauge
- 18A: Display panel
- 18B: Frame
- 20: Windscreen
- 20L: Left-of-meter portion
- 20R: Right-of-meter portion
- 22: Screen support member
- 24LU: Upper left bolt
- 24LD: Lower left bolt
- 24RU: Upper right bolt
- 24RD: Lower right bolt
- 26L: Left bolt
- 26R: Right bolt
- 31: Support member
- 32: Left rail
- 33: Right rail
- 34: Left slider
- 35: Right slider
- 41: Upper left bracket
- 42: Lower left bracket
- 43: Upper right bracket
- 44: Lower right bracket
- 45: Wire
- 51: Upper left pulley
- 52: Lower left pulley
- 53: Upper right pulley
- 54: Lower right pulley
- 62: Motor

## Claims

1. A straddled vehicle (1) comprising:
a support member (31) supported by a vehicle body (3);
a left rail (32) supported by the support member (31), wherein the left rail (32) extends up and down with regard to a vehicle up-down direction and is arranged leftward relative to a vehicle center line (CL) with regard to a vehicle left-right direction;
a right rail (33) supported by the support member (31), wherein the right rail (33) extends up and down with regard to the vehicle up-down direction and is arranged rightward relative to the vehicle center line (CL) with regard to a vehicle left-right direction;
a left slider (34) slidably engaged with the left rail (32);
a right slider (35) slidably engaged with the right rail (33);
a windscreen (20) supported by the left slider (34) and the right slider (35); and
a gauge (18) arranged rearward relative to the left rail (32) and the right rail (33) with regard to a vehicle front-rear direction, wherein:
at least a portion of the left rail (32) and at least a portion of the right rail (33) overlap with the gauge (18) as the vehicle (1) is seen from a front;
an interval (G) in a vehicle left-right direction between the left rail (32) and the right rail (33) is smaller than a dimension (W1) in the vehicle left-right direction of the gauge (18); and
the windscreen (20) includes a left-of-meter portion (20L) that is located downward relative to an upper end of the gauge (18) and upward relative to a lower end of the gauge (18) with regard to the vehicle up-down direction, and leftward relative to a left edge (18L) of the gauge (18) with regard to the vehicle left-right direction, and a right-of-meter portion (20R) that is located downward relative to the upper end of the gauge (18) and upward relative to the lower end of the gauge (18) with regard to the vehicle up-down direction, and rightward relative to a right edge (18R) of the gauge (18) with regard to the vehicle left-right direction.

2. The straddled vehicle (1) according to claim 1, wherein the gauge (18) includes a display panel (18A) and a frame (18B) arranged around the display panel (18A); and the interval (G) in the vehicle left-right direction between the left rail (32) and the right rail (33) is smaller than a dimension (W7) in the vehicle left-right direction of the display panel (18A).

3. The straddled vehicle (1) according to claim 1 or 2, wherein a distance in the vehicle left-right direction between a left end of the left rail (32) and a right end of the right rail (33) is smaller than the dimension (W1) in the vehicle left-right direction of the gauge (18).

4. The straddled vehicle (1) according to any one of claims 1 to 3, comprising a screen support member (22) that is fixed to the left slider (34), the right slider (35) and the windscreen (20), and supports the windscreen (20).

5. The straddled vehicle (1) according to claim 4, comprising:
a left bolt (26L) that fixes together the left slider (34) and the screen support member (22); and
a right bolt (26R) that fixes together the right slider (35) and the screen support member (22),
wherein the left bolt (26L) overlaps with the left rail (32) and the right bolt (26R) overlaps with the right rail (33) as the vehicle (1) is seen from the front.

6. The straddled vehicle (1) according to claim 4 or 5, comprising:
an upper left bolt (24LU), a lower left bolt (24LD), an upper right bolt (24RU) and a lower right bolt (24RD) with regard to the vehicle up-down and left-right directions that fix together the windscreen (20) and the screen support member (22), wherein:
the upper left bolt (24LU) is arranged leftward relative to the left rail (32) with regard to the vehicle left-right direction;
the lower left bolt (24LD) is arranged leftward relative to the left rail (32) with regard to the vehicle left-right direction and downward relative to the upper left bolt (24LU) with regard to the vehicle up-down direction;
the upper right bolt (24RU) is arranged rightward relative to the right rail (33) with regard to the vehicle left-right direction; and
the lower right bolt (24RD) is arranged rightward relative to the right rail (33) with regard to the vehicle left-right direction and downward relative to the upper right bolt (24RU) with regard to the vehicle up-down direction.

7. The straddled vehicle (1) according to any one of claims 1 to 6, wherein an upper end (32u) of the left rail (32) and an upper end of the right rail (33) are located upward relative to an upper end (18u) of the gauge (18) with regard to the vehicle up-down direction.

8. The straddled vehicle (1) according to any one of claims 1 to 7, wherein the interval (G) in the vehicle left-right direction between the left rail (32) and the right rail (33) is smaller than a minimum dimension (W2) in the vehicle left-right direction of a portion of the windscreen (20) that is below an upper end of the left rail (32) and the right rail (33) and above a lower end of the left rail (32) and the right rail (33) with regard to the vehicle up-down direction.

9. The straddled vehicle (1) according to any one of claims 1 to 8, wherein the interval (G) in the vehicle left-right direction between the left rail (32) and the right rail (33) is smaller than a half of a dimension (W3) in the vehicle left-right direction of the windscreen (20) at a middle position in an up-down direction of the left rail (32) or the right rail (33).

10. The straddled vehicle (1) according to any one of claims 1 to 9, wherein the windscreen (20) is curved rearward with regard to the vehicle front-rear direction while extending outward in the vehicle left-right direction; and
as the vehicle (1) is seen from a side, a distance (K1) in the vehicle front-rear direction between a front end (20ff) of the windscreen (20) and a front end (32f) of the left rail (32) or a front end of the right rail (33) with regard to the vehicle front-rear direction is smaller than a dimension (K2) in the vehicle front-rear direction of the left rail (32) or the right rail (33).

11. The straddled vehicle (1) according to any one of claims 1 to 10, comprising:
an upper left bracket (41) that connects together the support member (31) and the left rail (32);
a lower left bracket (42) that is arranged downward of the upper left bracket (41) with regard to the vehicle up-down direction and connects together the support member (31) and the left rail (32);
an upper right bracket (43) that connects together the support member (31) and the right rail (33);
a lower right bracket (44) that is arranged downward of the upper right bracket (43) with regard to the vehicle up-down direction and connects together the support member (31) and the right rail (33);
an upper left pulley (51) that is supported by the upper left bracket (41);
a lower left pulley (52) that is arranged downward of the upper left pulley (51) with regard to the vehicle up-down direction and supported by the lower left bracket (42);
an upper right pulley (53) that is arranged rightward of the upper left pulley (51) with regard to the vehicle left-right direction and supported by the upper right bracket (43); a lower right pulley (54) that is arranged downward of the upper right pulley (53) with regard to the vehicle up-down direction and rightward of the lower left pulley (52) with regard to the vehicle left-right direction and supported by the lower right bracket (44); and
a wire (45) that is connected to the left slider (34) and the right slider (35) and wound around the upper left pulley (51), the lower left pulley (52), the upper right pulley (53), and the lower right pulley (54),
wherein the upper left pulley (51), the lower left pulley (52), the upper right pulley (53), and the lower right pulley (54) are arranged rightward relative to the left rail (32) and leftward relative to the right rail (33) with regard to the vehicle left-right direction.

12. The straddled vehicle (1) according to claim 11, wherein dimensions in an axial direction of the upper left pulley (51), the lower left pulley (52), the upper right pulley (53), and the lower right pulley (54) are smaller than dimensions in a radial direction thereof, respectively; and
axes of the upper left pulley (51), the lower left pulley (52), the upper right pulley (53), and the lower right pulley (54) all extend forward with regard to the vehicle front-rear direction.

13. The straddled vehicle (1) according to claim 11 or 12, comprising:
a motor (62) configured to move the windscreen (20) upward or downward with regard to the vehicle up-down direction by pulling the wire (45), wherein:
the motor (62) is arranged leftward relative to the left rail (32) or rightward relative to the right rail (33) with regard to the vehicle left-right direction; and/or the motor (62) is arranged downward relative to the left rail (32) and the right rail (33) with regard to the vehicle up-down direction.

14. The straddled vehicle (1) according to any one of claims 1 to 10, comprising:
a motor (62) configured to move the windscreen (20) upward or downward with regard to the vehicle up-down direction, wherein:
the motor (62) is arranged leftward relative to the left rail (32) or rightward relative to the right rail (33) with regard to the vehicle left-right direction; and/or the motor (62) is arranged downward relative to the left rail (32) and the right rail (33) with regard to the vehicle up-down direction.
